# EUROPEAN PATENT SPECIFICATION

(11) **EP 2 407 296 B1**
(45) Date of publication and mention of the grant of the patent: **30.04.2014**
(21) Application number: 10380091.8
(22) Date of filing: 12.07.2010
(51) Int. Cl.: B29C 45/32, B29C 45/17

(54) **Sandwich injection mould**
Sandwich-Spritzgusswerkzeug
Moule d'injection en sandwich

(43) Date of publication of application: 18.01.2012
(73) Proprietor: Troqueles y Moldes de Galicia, S.A., 15890 Santiago de Compostela (ES)
(72) Inventor: Rodriguez Batalla, Ramon, 15704 Santiago de Compostela (ES); Marqués Gallo, Higinio, 15894 Los Tilos - Teo (La Coruna) (ES)
(74) Representative: Lehmann Novo, Maria Isabel

(56) References cited:
- US-A1- 2009 304 841
- US-B1- 6 250 906
- RAMELLA G ET AL: "CANALI CALDI PER STAMPI STACK", INTERPLASTICS, 41981 3, vol. 20, no. 4, 1 May 1997 (1997-05-01), pages 120-124, XP000658224, ISSN: 0392-3800

## Description

### PURPOSE OF THE INVENTION

This invention relates to a sandwich injection mould, i.e. an injection mould with three parts, two side and one central, of which one of the side parts is fixed and the other two are moveable, there being two working areas of the mould, between the central part and each of the side parts.

The purpose of the invention is to make it very easy to assemble/remove each of the three parts that make up said mould, in fault repair and maintenance operations, enabling the individual extraction of the part affected, and a subsequent assembly with the correct and precise relative positioning between the three parts, all of which occupying a minimum volumetric space.

The invention relates to the field of injection moulding machinery.

### BACKGROUND TO THE INVENTION

As stated above, sandwich injection moulds are made of three parts, one central moveable part, moveable on guides that act simultaneously as support means, and two side parts one of which is fixed while the other is also moveable, such that these three parts can be closely joined together, creating between them the moulding chambers, or separated to enable the moulded parts to be removed.

The problem with these sandwich moulds is essentially down to two aspects: firstly guiding and supporting the central part of the mould and secondly the need to remove the entire mould from the machine, for fault repair or maintenance tasks.

Sandwich moulds known to date either require a special injection machine to support and guide the aforementioned central part, or they have cumbersome lower supports, that require considerable space to fit, which makes it even more difficult to remove the mould from the machine for the aforementioned fault repair and/or maintenance tasks.

Document US-B-6 250 906 discloses a mould in accordance with the preamble of claim 1.

### DESCRIPTION OF THE INVENTION

The sandwich injection mould proposed by the invention, as defined by claim 1, resolves the aforementioned problem entirely satisfactorily, in relation to the different aspects mentioned.

To do so the mould recommended incorporates a simple, safe and compact guiding and support mechanism, built into the mould itself and not exceeding the volume of this latter, ensuring that the central part, when the mould is opened, is always in its centre, with the same gap on each side and guaranteeing during travel its exact position without movements, enabling the mould to be assembled and disassembled by individual parts within the machine.

More specifically the aforementioned support and guiding mechanism comprises four double racks, parallel to each other and along an imaginary mould open/closed or movement axis, said racks being fixed by means of appropriate supports to the three parts of the mould, each double rack forming a telescopic element that can vary its actual length and, consequently, move the three parts of the mould closer to or further away from each other.

Specifically each double rack has two opposing racks, linked to each other by means of an intermediate pinion mounted on a box that is in turn joined to the corresponding support of the central part, while the two aforementioned racks are each attached to one of the ends of the mould, and specifically to the respective supports.

In accordance with this structure, the intermediate part of the mould or its central body, is always held at the mid point of the telescopic racks, regardless of the actual length of these at any given time, i.e. regardless of whether the mould is open or closed.

This structure means that when the mould is open the intermediate part of the central body of the mould can be detached from the two lower telescopic racks, by unscrewing its lower supports from the boxes of said racks and simultaneously the two upper telescopic racks can be detached from the supports corresponding to the side or end parts, this unit being removable for any type of operation that needs to be carried out on the central body, for which reason said body incorporates top rings to lift and remove the mould using a crane or similar.

If the moveable side part of the mould needs to be removed, the four double or telescopic racks are unscrewed from the corresponding supports of each moveable part, and by moving the central body towards the fixed side part, the aforementioned moveable side part is released and can be removed by pulling it upwards, as above.

Finally, if the fixed side part needs to be removed, the process is the same as above, having first lifted said fixed side part away from the injection machine.

When subsequently assembling any of the three parts of the mould, fixing any one of them with the fully extended telescopic racks, said parts are located individually in the initial working position, since this is determined by the mechanical relationship between the telescopic racks and the supports related to the three parts of the mould.

Finally, it should be noted that the fixed and moveable side parts are fixed to the injection machine using clamps held by screws, while the central part is supported by prismatic guides in which the racks are held, i.e. that the central part is physically independent from the injection machine, unlike in conventional systems.

### DESCRIPTION OF THE FIGURES

To complement the description provided and to promote a better understanding of the characteristics of the invention, pursuant to a preferred example of a practical embodiment of the same, an illustrative and non-limiting set of figures is included as an integral part of said description, in which the following is shown:
Figure 1 shows, in a general perspective view, a sandwich injection mould realised in accordance with the purpose of this invention.
Figure 2 shows a detail, also in perspective, of one of the telescopic racks used in said moulds, to the ends of which are fixed the supports that link it to the side parts of the mould, as well as the support guide for the central part of the mould.
Figure 3 shows a blown-up detail of the previous figure, adding the box that houses the pinion that links the two racks that make up each telescopic rack and to which the central body of the mould is to be fixed.
Figure 4 shows a side elevation of the mould, duly mounted on the injection machine following the central body separation phase.
Figures 5 and 6 show representations similar to Figure 4, but corresponding, respectively, to the removal of the moveable side part of the mould and the fixed side part of the same.
Figure 7 shows, also as a side elevation, a more complete schematic representation of the injection machine, with the sandwich mould according to the invention in open position, with a blown-up detail of the connection between the mould and the machine.

### PREFERRED EMBODIMENT OF THE INVENTION

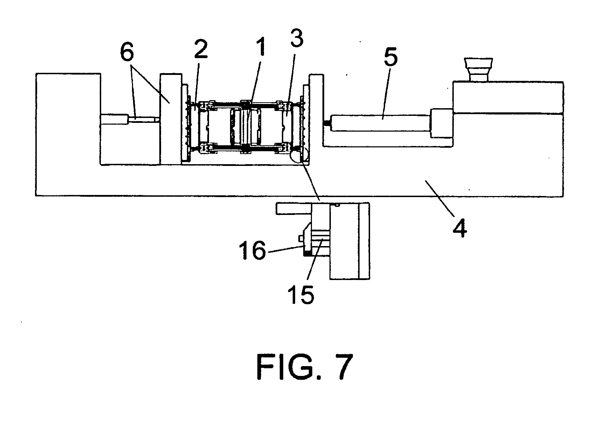

The figures given, and in particular Figure 7, show how the mould according to the invention comprises three parts, a central part (1), a moveable side part (2) and a fixed side part (3), joined together in the manner described below, forming a unit that is housed in the injection machine (4) with its corresponding injection nozzle (5) and with its corresponding piston or mechanism (6) for opening and closing the mould.

According to the invention, both the moveable side part (2) and the fixed side part (3) incorporate at each of their four corners as many supports (7), attached to the same using screws or any other appropriate means.

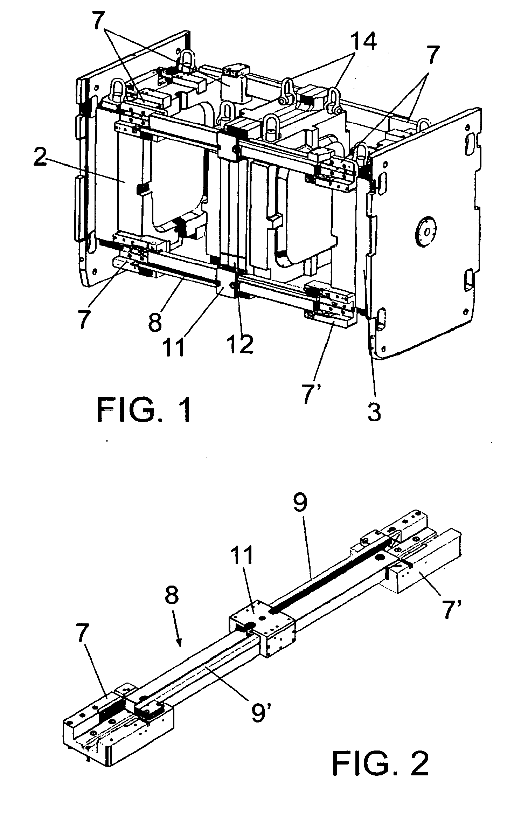

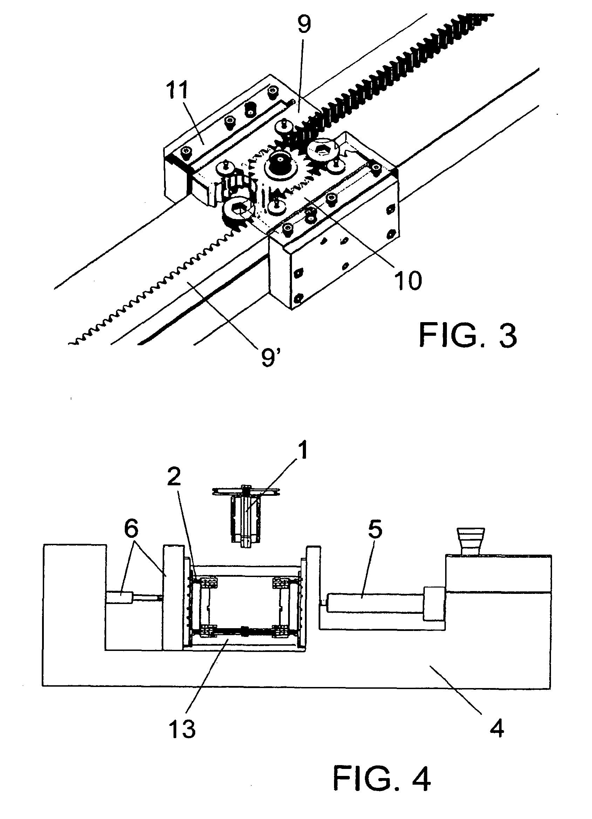

Between each pair of supports (7, 7') aligned in the opening/closing direction of the mould, there is a double rack (8), specifically a telescopic rack, whose structure is shown clearly in Figures 2 and 3.

This telescopic rack (8) comprises two opposed actual racks (9, 9') joined to each other by means of an intermediate pinion (10) mounted inside a box (11) that is used by both racks (9, 9'), such that said pinion (10) forces the racks (9, 9') into a synchronised approach in response to the lengthening/shortening of the double telescopic rack, or the opening and closing of the mould, which is the same thing.

One of the racks (9) is connected at one end to the support (7), while the other rack (9') is connected to the support (7').

The corresponding support (12) attached to the central body (1) is attached by screwing or any other suitable means to the box (11) that houses the pinion linking the two racks in each telescopic rack.

Thus, the moveable and fixed side parts (2) of the mould are fixed by the supports (7, 7'), while the central part (1) rests on the guides (13) associated with the racks (9, 9'), remaining perfectly stable inside the mould, with the option of approaching or distancing when opening or closing the mould, being easily removable individually and without increasing the volume of the mould at all, as can be seen in the figures, in particular Figure 7.

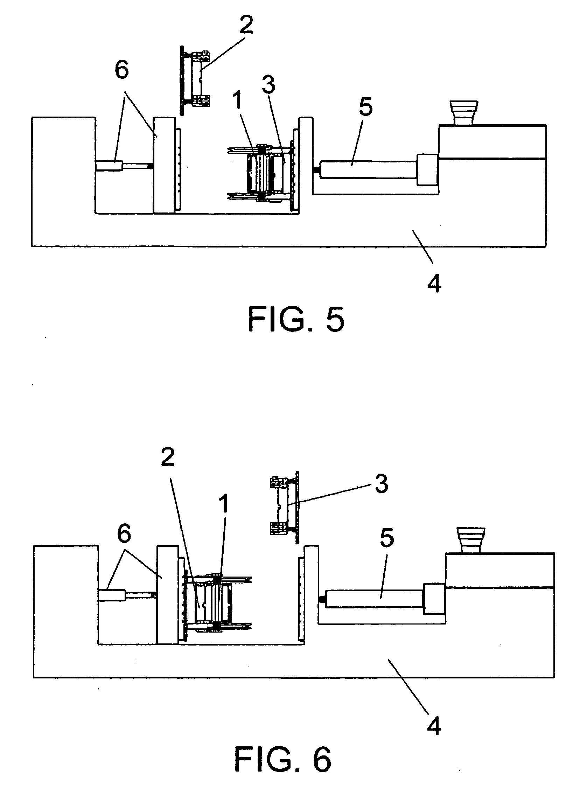

The aforementioned separate removal of any of the three parts of the mould is performed as follows:
- To remove the central body (1) of the mould, simply unscrew the four supports (12) on said body from the respective boxes (11), so that said central body can be removed by pulling it up, using the rings (14) fitted to the top of it, as shown in Figure 4.
- To remove the moveable side part (2) of the mould, when it is open, as in the previous case, simply unscrew the telescopic racks (8) from their corresponding supports (7), and unblock said moveable part (2) by removing the screws (15) from the clamps (16) that are shown clearly in the blown-up detail in Figure 7, so that said part (2) is released and can be removed from the mould by pulling up on it, as in the previous case, and as shown in Figure 5.
- Finally, to remove the fixed side part (3), prior to an action similar to removing the moveable part (2), it is necessary to unblock said fixed part (3) by removing the screws (15) from the clamps (16) that are clearly shown in the blown-up detail in Figure 7, before removing said part (3) as shown in Figure 6.

## Claims

1. Sandwich injection mould, of the type made of three parts, a central part (1), a moveable side part (2), and another fixed side part (3), that can be brought closer together or further apart when opening and closing the mould, said three parts (1, 2, 3) of the mould being linked together by means of four double telescopic racks (8), oriented in the opening/closing direction of the mould, each telescopic rack (8) being formed by two opposed racks (9, 9') linked together by means of an intermediate pinion (10) housed inside a intermediate box (11) crossed by said racks (9, 9'), each intermediate box (11) being attached in turn to a support (12) attached to the central part (1), **characterised in that** the central part (1) is guided and supported by a set of prismatic guides on which the racks (8) are held, such that the central part (1) rests on the prismatic guides, one of the ends of the racks (8) being attached to the moveable side part (2) via a support (7) suitably attached thereto and the other attached to a support (7') attached likewise to the fixed side part (3) of the mould.

2. Sandwich injection mould according to Claim 1, **characterised in that** each double telescopic rack (9, 9') is removably attached to the corresponding support (7, 7') by screwing, said supports (7, 7') in turn being attached to the moveable side part (2) of the mould and to the fixed side part (3) of the mould, respectively, while the central moveable part (1) of the mould is removably attached by screwing to the supports (12) of the boxes (11) corresponding to the four double racks (9, 9'), each of the three parts (1, 2, 3) of the mould being provided with top rings (14) for the lifting thereof by a suitable lifting mechanism, following proper uncoupling of the racks and supports.

3. Sandwich injection mould according to Claim 2, **characterised in that** the three parts (1. 2, 3) of the mould can be removed individually.

4. Sandwich injection mould according to the above claims, **characterised in that** to remove the central part (1) its lower supports (12) are separated from the boxes (11), while the upper telescopic racks (8) are separated from the supports (7) of the side parts (2, 3), while to release each of these latter the four supports (7) of each one are detached from the four racks (8), having first unblocked the fixed side part (3), if necessary.

## Patentansprüche

1. Sandwich-Spritzgussform, der Art bestehend aus drei Teilen, einem mittleren Teil (1), einem beweglichen seitlichen Teil (2), und einem weiteren, feststehenden seitlichen Teil (3), welche beim öffnen und Schließen der Form näher zusammen oder weiter auseinander gebracht werden können, wobei die genannten drei Teile (1, 2, 3) der Form durch vier doppelte Teleskopschienen (8) miteinander verbunden sind, welche in der öffnungs-/Schließrichtung der Form ausgerichtet sind, wobei jede der Teleskopschienen (8) durch zwei gegenüberliegende Schienen (9, 9') gebildet ist, die durch ein innerhalb eines Zwischengehäuses (11) aufgenommenes Zwischenritzel (10), das von den genannten Schienen (9, 9') durchquert wird, miteinander verbunden sind, wobei jedes der Zwischengehäuse (11) wiederum an einem am mittleren Teil (1) befestigten Träger (12) befestigt ist, **dadurch gekennzeichnet, dass** der mittlere Teil (1) durch einen Satz an Prismenführungen, auf welchen die Schienen (8) gehalten sind, geführt und getragen wird, so dass der mittlere Teil (1) auf den Prismenführungen ruht, wobei eines der Enden der Schienen (8) an dem beweglichen seitlichen Teil (2) über einen Träger (7) befestigt ist, der in geeigneter Art und Weise an diesem befestigt ist, und das andere an einem Träger (7') befestigt ist, der entsprechend an dem feststehenden seitlichen Teil (3) der Form befestigt ist.

2. Sandwich-Spritzgussform nach Anspruch 1, **dadurch gekennzeichnet, dass** jede der doppelten Teleskopschienen (9, 9') abnehmbar an dem entsprechenden Träger (7, 7') angeschraubt ist, wobei die genannten Träger (7, 7') wiederum jeweils an dem beweglichen seitlichen Teil (2) der Form und an dem feststehenden seitlichen Teil (3) der Form befestigt sind, während der bewegliche mittlere Teil (1) der Form abnehmbar an den Trägern (12) der Gehäuse (11), welche den vier doppelten Schienen (9, 9') entsprechen, angeschraubt ist, wobei jedes der drei Teile (1, 2, 3) der Form mit oberen Ringen (14) zu dessen Anheben durch einen geeigneten Hebemechanismus nach einem ordnungsgemäßen Loslösen der Schienen und Träger versehen ist.

3. Sandwich-Spritzgussform nach Anspruch 2, **dadurch gekennzeichnet, dass** die drei Teile (1, 2, 3) der Form einzeln entfernt werden können.

4. Sandwich-Spritzgussform nach den vorherigen Ansprüchen, **dadurch gekennzeichnet, dass** zum Entfernen des mittleren Teils (1) dessen untere Träger (12) von den Gehäusen (11) getrennt werden, während die oberen Teleskopschienen (8) von den Trägern (7) der seitlichen Teile (2, 3) getrennt werden, während zum Lösen der letzteren die jeweiligen vier Träger (7) von den vier Schienen (8) gelöst werden, wobei zunächst der feststehende seitliche Teil (3) freigegeben wird, falls nötig.

## Revendications

1. Moule d'injection en sandwich, du type constitué par trois parties, une partie centrale (1), une partie latérale mobile (2) et une autre partie latérale fixe (3), qui peuvent se rapprocher ou s'éloigner lors de l'ouverture et de la fermeture du moule, lesdites trois parties (1, 2, 3) du moule étant reliées les unes aux autres par l'intermédiaire de quatre râteliers doubles télescopiques (8), orientés dans la direction d'ouverture / fermeture du moule, chaque râtelier télescopique (8) étant formé par deux râteliers opposés (9, 9') reliés ensemble au moyen d'un pignon intermédiaire (10) logé à l'intérieur d'une boite intermédiaire(11) traversée par lesdits râteliers (9, 9'), chaque boite intermédiaire (11) étant fixée à son tour à un support (12)fixé à la partie central (1), **caractérisé en ce que** la partie centrale (1) est guidée et supportée par un ensemble de guides prismatiques sur lesquelles les râteliers (8) sont soutenus, de sorte que la partie centrale (1) s'appuie sur les guides prismatiques, une des extrémités des râteliers (8)étant reliée à la partie latérale mobile (2) au moyen d'un support (7) convenablement relié à celle-ci et l'autre relié à un support (7') relié également à la partie latérale fixe (3) du moule.

2. Moule d'injection en sandwich selon la Revendication 1, **caractérisé en ce que** chaque râtelier télescopique double (9, 9') est relié de manière mobile au support correspondant (7, 7') en vissant les dits supports (7, 7'), lesquels sont reliés à leur tour à la partie latérale mobile(2) du moule et à la partie latérale fixe (3) du moule, respectivement, tandis que la partie centrale mobile (1) du moule est reliée de manière mobile en la vissant aux supports (12) des boîtes (11) qui correspondent aux quatre râteliers doubles (9, 9'), chacune des trois parties (1, 2, 3) du moule étant munie de bagues supérieures (14) pour les lever au moyen d'un mécanisme de levage adéquat, après avoir désaccouplé adéquatement les râteliers et les supports.

3. Moule d'injection en sandwich selon la Revendication 2, **caractérisé en ce que** les trois parties (1, 2, 3) du moule peuvent être retirées individuellement.

4. Moule d'injection en sandwich selon les revendications précédentes, **caractérisé en ce que** pour retirer la partie centrale (1) on sépare ses supports inférieurs (12) des boîtes (11) en même temps qu'on sépare les râteliers supérieurs télescopiques(8)des supports (7) des parties latérales (2, 3), tandis que pour retirer chacune de ces dernières les quatre supports (7) de chacune d'entre elles sont détachés des quatre râteliers (8) après avoir déverrouillé la partie latérale fixe (3) si nécessaire.
